# EUROPEAN PATENT APPLICATION

(11) **EP 1 672 725 A1**
(43) Date of publication of application: **21.06.2006**
(21) Application number: 05257547.9
(22) Date of filing: 08.12.2005
(51) Int. Cl.: H01M 8/02

(54) **Near-isothermal high-temperature fuel cell**

(30) Priority: 15.12.2004 US 11372
(71) Applicant: GENERAL ELECTRIC COMPANY, Schenectady, New York 12345 (US)
(72) Inventor: Regh, Timothy Joseph, Huntington Beach, CA 92648 (US); Sokolov, Pavel A., Redonto Beach, CA 90277 (US); Yang, Deliang, Torrance, CA 90501 (US)
(74) Representative: Pedder, James Cuthbert

(57) **Abstract**

A fuel cell includes a plurality of power-producing electrode-electrolyte assemblies and heat-conducting elements. Cathode air supplied to the fuel cell is heated inside the fuel cell by fuel cell by-product heat via the heat-conducting elements.

## Description

The present invention relates to fuel cell technology and, more particularly, a fuel cell including power-producing electrode-electrolyte assemblies and heat-conducting elements.

Though very efficient power producers, fuel cells still generate much by-product heat that needs to be removed to avoid overheating the fuel cell. In high-temperature fuel cells, such as the solid oxide fuel cell (SOFC), systems are normally designed so that the by-product heat is removed with air via an airflow through the fuel cell. The air also serves as the reactant in the fuel cell cathode.

Usually, the cooling requirement imposed on the airflow results in a much higher airflow rate than that airflow required for the fuel cell reaction. This is due at least in part to the poor heat transfer characteristics of air and, equally importantly, the inability of the SOFC stack to withstand a large thermal gradient or temperature rise from stack inlet to stack exhaust due to thermal stresses. The presence of large temperature gradients may be detrimental to both structural integrity and reliability of the stack. If the temperature rise is too large, differential thermal expansion of various stack components (cell, interconnect, seals, etc.) can lead to cell fracture, loss of sealing, or loss of contact between stack components, thereby leading to stack failure.

In the absence of stack failure, stack service life may be compromised due to the fact that cell component degradation is strongly temperature dependent. Cell degradation is much faster in the high temperature region (typically near the exhaust) than in the low temperature region (typically near the inlet), thereby over time possibly leading to reduced stack power or system efficiency, or both. Thus, only part of the airflow through the fuel cell is used for reaction purposes with the rest of the airflow serving the stack cooling purpose. The power required for circulating this additional cooling airflow lowers the overall system efficiency.

Additionally, because the SOFC stack cannot withstand large temperature gradients, it is desirable and often necessary to preheat the air to a temperature nearly equal to the stack temperature before it enters the stack. This heat transfer process caused by preheating is also inefficient, resulting in some loss of system efficiency. The transfer process is also complicated and expensive due to the need to employ high temperature materials consistent with the high operating temperatures of SOFC stacks. These problems can be solved if a more efficient fuel cell cooling method is devised.

In an exemplary embodiment of the invention, a fuel cell includes a plurality of power-producing electrode-electrolyte assemblies and heat conducting elements, wherein cathode air supplied to the fuel cell is heated inside the fuel cell by fuel cell by-product heat via the heat-conducting elements.

In another exemplary embodiment of the invention, a fuel cell includes an air inlet region leading to an airflow path, a plurality of power-producing electrode-electrolyte assemblies, and heat-conducting elements. Cathode air supplied to the fuel cell via the air inlet region is heated inside the fuel cell by fuel cell by-product heat via the heat-conducting elements.

In yet another exemplary embodiment of the invention, a method of operating a fuel cell to generate electrical energy includes the steps of effecting a chemical reaction in the fuel cell; absorbing heat generated by the chemical reaction and the electrical current by a heat-absorbing section of heat-conducting elements; transferring the heat to a heat-desorbing section, wherein reactant air enters the fuel cell at a temperature significantly lower than a cell operating temperature, and wherein a temperature of the heat-conducting elements in an air inlet region is close to the cell operating temperature; and heating cathode air supplied to the fuel cell via the air inlet region inside the fuel cell by fuel cell by-product heat via the heat-conducting elements.

The invention will now be described in greater detail, by way of example, with reference to the drawings, in which:-
Figure 1 shows the schematic of a fuel cell made of repeat units that contains interconnects and an anode-cathode-electrolyte assembly; and
FIGURES 2 and 3 show cross sections of fuel cell interconnects containing heat-conducting elements; and
FIGURES 4 and 5 show top views of fuel cell interconnects.

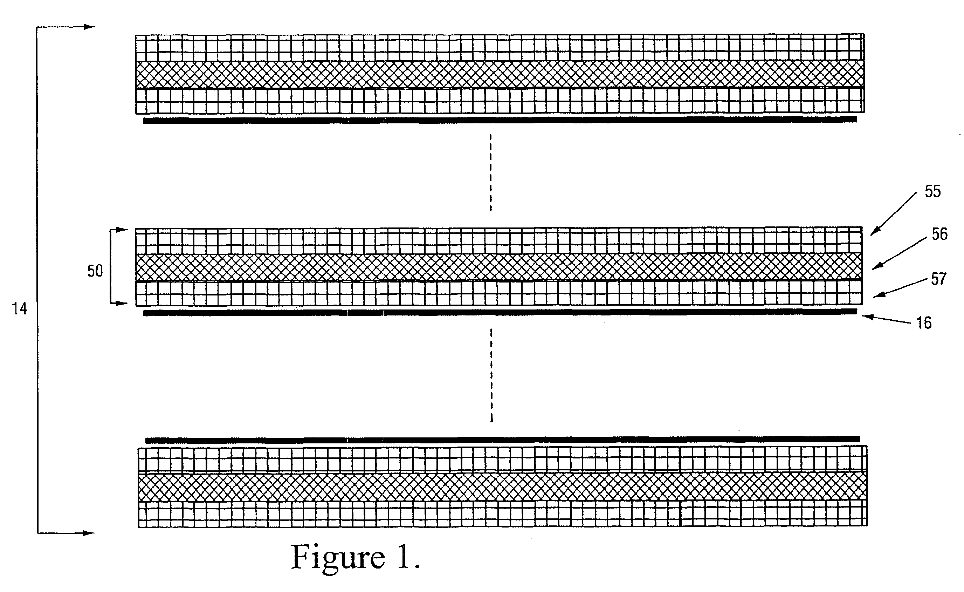

Details of the fuel cell 14 will be described with reference to FIGS. 1-5 showing schematic illustrations of a fuel cell 14 with its repeat units. Each repeat unit includes an anode-electrolyte-cathode assembly 16, an interconnect 50 with anode flow channels 55, cathode flow channels 57 separator 56 separating the two flow fields, and heat-conducting elements 18, such as heat pipes. The heat-conducting elements 18 may or may not be part of the separator 56. They can be placed in the anode flow fields 55 or the cathode flow fields 57, and may themselves form the flow fields. The elements 18 can be divided into a heat-absorbing section 20 and a heat-desorbing section 22. The sections 20 and 22 are typically aligned along the airflow path so that the heat-desorbing section 22 is placed at or near the air inlet. The heat-absorbing section 20 is preferentially placed in the areas of high electrical current production.

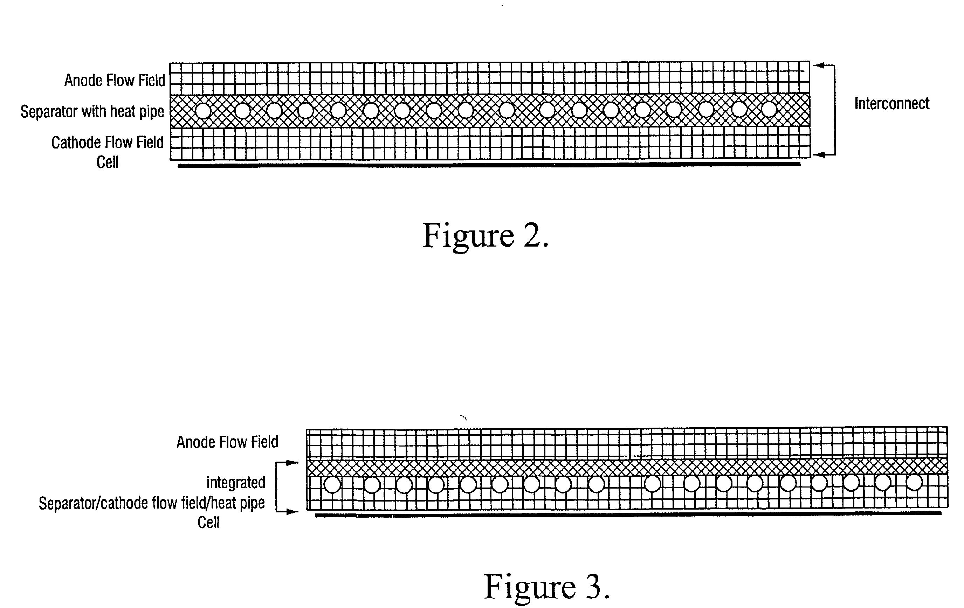

In FIG. 2, a cross sectional view of a fuel cell interconnect 50, often called a bipolar plate, is shown. The interconnect separate the anode and the cathode of adjacent cells, preventing the mixing of the anode and cathode reactants. The interconnect also provides a current path for electron transfer between adjacent cells. The anode flow field 55 is shown at the top surface of the interconnect 50 and serves the purpose of directing anode gas to the adjacent cell. The cathode flow field 57 is shown at the bottom surface of the interconnect 50 and serves the purpose of directing cathode gas to the adjacent cell. In the core of the plate 50 is the separator plate 56 which contains heat-conducting elements 18. Alternatively, the heat-conducting elements 18 can be located in the cathode flow field 57 as shown in FIG. 3 (or less preferentially in the anode flow field 55). The top surface of the interconnect interfaces to the anode side of a cell 16. The cell 16 and interconnect 50 comprise a repeat unit within the fuel cell stack 14. The bottom face of the interconnect 50 interfaces to the cathode side of an adjacent cell. Note that not every interconnect 50 need contain the heat conducting elements 18. For example, every other cell, every third cell, or every n^{th} cell might contain the heat conducting elements 18. In this case, thermal gradients in the cells that do not contain heat-conducting elements 18 are minimized by conduction heat transfer down the length of the stack to the cells that do contain interconnects 50 with heat-conducting elements 18. Heat generated in the cells that do not contain heat-conducting elements 18 is transferred from the cell by the reactant flows within the cell as well as by the aforementioned conduction heat transfer down the length of the stack to the cells that do contain interconnects 50 with heat-conducting elements 18.

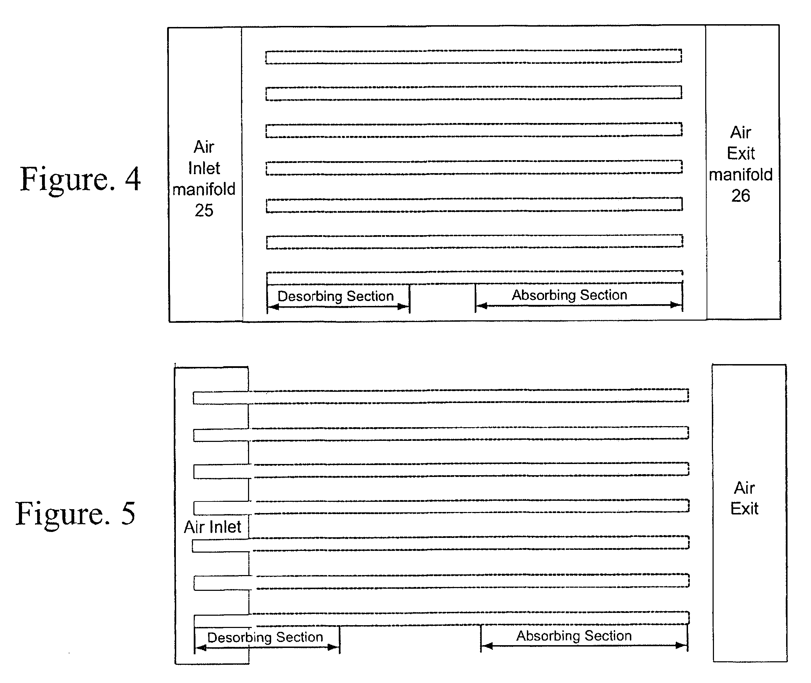

Shown in FIGS. 4 and 5 are top views of a fuel cell interconnect 50 containing heat-conducting elements 18. The interconnect 50 is shown in two configurations, whereby the heat-conducting elements are contained within the active area of the fuel cell 14 (FIG. 4), or alternatively, span at least part of the active area of the fuel cell 14 and the air inlet manifold 25 (FIG. 5). Heat generated within the cell 16 during electrochemical operation is conducted through the interconnect 50 to the heat conducting elements, and is transferred within the plane of the interconnect, thereby minimizing temperature gradients within the cell and interconnect while simultaneously transferring heat to the cathode gas (the air).

In the case where the heat conducting elements 18 are heat pipes, their condenser sections are located adjacent the air inlet manifold 25 to enable heat transfer from the heat pipes 18 to the relatively cold inlet air, while the evaporator sections absorb the fuel cell byproduct heat and conduct it to the condenser sections. While the condenser section is located in proximity to the air inlet manifold 25, it may or may not extend all the way into the manifold 25 as shown in FIGS. 4-5. In the case where the heat conducting elements are high heat conductance members, the cross sectional area and thermal conductivity of the members are chosen and arranged within the stack so as to transfer heat from the hot regions of the fuel cell to the cold regions of the fuel cell by thermal conduction.

The heat generated by the chemical reaction of the fuel cell 14 as well as the electrical current is absorbed by the heat-conducting elements 18 and transferred to the heat-desorbing section 22. The reactant air enters the fuel cell 14 at a temperature much lower than the cell operating temperature. The temperature of the heat-conducting elements 18 in the air inlet region is close to the cell operating temperature. Heat is rapidly desorbed from the heat-conducting elements 18 into the air due to the large temperature difference between the air and the elements. Analyses have shown that the air temperature reaches the cell operating temperature within a very short distance inside the cell, generally a small fraction of the total length of the airflow path. The result is that the temperatures of the air, the fuel cell, and the heat-conducting elements are close to each other and nearly constant across the whole assembly due to the high thermal conductivity of the elements.

In a preferred embodiment, heat pipes are employed as heat-conducting elements 18. The heat pipes include a sealed enclosure with an operating fluid inside. The operating fluid boiling temperature is selected so that it is close to the cell operating temperature.

The boiling region of the heat pipe serves as the heat-absorbing region 20. The fuel cell reaction by-product heat provides the energy required for boiling. Since the boiling process occurs at a nearly constant temperature, the temperature gradients in the fuel cell close to the heat-absorbing section 20 of the heat pipes are negligible while the heat flux is large. The heat pipe working fluid vapor is then transferred to the condensing region, which corresponds to the heat-desorbing section 22, of the heat pipe by the vapor partial pressure differential. The condensing section of the heat pipes serves as the heat-desorbing section. The working fluid condenses and releases heat to the incoming airflow. Since the condensing process occurs at a nearly constant temperature, the temperature gradients in the fuel cell close to the heat-desorbing section of the heat pipes are also negligible. The condensed working fluid is then transferred back to the boiling region by the capillary mechanism thus completing the heat pipe working fluid cycle.

The fuel cell 14 has fuel (anode) and air (cathode) flow fields 55 and 67, respectively that provide the reactants required for the fuel cell reaction. While the fuel cell is nearly isothermal due to the heat-conducting elements 18, the by-product heat must still be removed from the stack to prevent the stack from overheating and attaining a temperature higher than desired. The by-product heat of the fuel cell 14 necessitates the use of excess inlet air into the cathode flow field 57 for temperature control and cooling purposes, but not for the purpose of minimizing temperature gradients, as the heat conducting elements accomplish this purpose. In order to maintain the fuel cell operating temperature, the air used in the cathode flow fields 57 absorbs by-product heat and its temperature increases to a level just below the fuel cell operating temperature. Because the cathode air is used for reaction purpose and heat removal purpose, but not thermal gradient control purposes as in conventional systems, lower air flows and lower air inlet temperatures are possible, thereby increasing system efficiency. Because the cell is held nearly isothermal by the heat-conducting elements 18, cooler air can be introduced into the fuel cell without damaging the cells for heat removal purposes than can be used in conventional systems. The fuel cell by-product heat is then conducted via the heat-conducting elements and other stack components to directly heat the fuel cell cathode air. The solution herein heats the air directly utilizing the fuel cell by-product heat and thus eliminates the need for a high-temperature heat exchanger or other external means while operating the system at a reasonably low pressure to achieve high system efficiency.

With the described fuel cell construction, by-product heat is transferred directly to one or both reactants (and not to a secondary cooling fluid) within the fuel cell, thus minimizing losses of by-product heat that reduce system efficiency, and eliminating the need for complex, expensive heat transfer equipment for pre-heating the air. In addition, by-product heat is redistributed within the stack in order to minimize temperature gradients within the stack. The fuel cell itself is nearly isothermal, even though the reactant gas temperature is not equal to the stack temperature. Note that the by-product heat can alternatively or simultaneously be transferred to the fuel.

With the fuel cell of the invention, the heat-conducting elements have a much higher thermal conductivity than metals, which allows for efficient fuel cell by-product heat management. In addition, the high thermal conductivity of the elements allows for very small temperature gradients in the fuel cell, thus making the fuel cell nearly isothermal. The fuel cell generates power from fuel and air supplied from outside sources. The fuel cell is cooled by its reactants, primarily by the air, which serves a dual purpose to supply the oxygen for the fuel cell reaction and to remove the fuel cell by-product heat. The heat pipes, or other heat-conducting elements, transfer the by-product heat to the supplied air. The heat-conducting elements have a heat absorbing section and a heat desorbing section. The heat-absorbing section is located near the air exit areas in the fuel cell. The by-product heat is absorbed by the elements and rapidly conducted to the heat-desorbing section, often near the air inlet area. The air entering at a temperature much lower than the cell operating temperature absorbs the heat from the heat-desorbing section of the heat-conducting elements.

The airflow required for cooling the fuel cell is much lower compared to state-of-the-art fuel cell designs due to the low inlet air temperature. The reduced airflow requirement leads to a lower system air compressor power requirement and thus, improved system efficiency. In addition, the low air inlet temperature requirement eliminates the need for pre-heating the air to a temperature close to the cell operating temperature, thus reducing the part count in the system thermal management subsystem and improving overall system reliability. Additionally, the high thermal conductivity of the heat-conducting elements leads to reduced temperature gradients in the fuel cell. The reduced temperature gradients lead to reduced thermal stresses in the cell and reduced probability of cell failure, thus enabling a more robust and reliable fuel cell design.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

Other such embodiments might include introducing fuel into the fuel cell that is colder than that introduced into conventional systems as an alternative to, or in combination with, the introduction of air colder than that allowed by conventional systems.

## Claims

1. A fuel cell (14) comprising a plurality of power-producing electrode-electrolyte and interconnect assemblies (50), the interconnect assemblies including heat-conducting elements (18), wherein reactant supplied to the fuel cell is heated inside the fuel cell by fuel cell by-product heat via the heat-conducting elements.

2. A fuel cell according to claim 1, wherein the reactant comprises cathode air.

3. A fuel cell according to claim 1, further comprising additional interconnect assemblies (50) without heat-conducting elements.

4. A fuel cell according to claim 1, wherein fuel cell by-product heat is at least partially transferred to reactants within the fuel cell.

5. A fuel cell according to claim 4, further comprising a heat-desorbing region (22) and a heat-absorbing (20) region within the active region of the fuel cell.

6. A fuel cell according to claim 1, wherein the heat-conducting elements (18) comprise heat pipes.

7. A fuel cell according to claim 1, comprising a fuel cell interconnect (50) dividing an anode flow field (55) directing anode gas to an adjacent cell and a cathode flow field (57) directing cathode gas to the adjacent cell.

8. A fuel cell according to claim 1, wherein the heat-conducting elements (18) comprise heat pipes, and wherein condenser sections thereof are disposed adjacent an air inlet manifold (25) of the fuel cell.

9. A fuel cell according to claim 1, wherein the heat-conducting elements (18) comprise heat pipes, and wherein condenser sections thereof are at least partially located within an air inlet manifold (25) of the fuel cell.

10. A fuel cell according to claim 1, wherein the heat-conducting elements (18) comprise high heat conductance members, and wherein a cross sectional area and thermal conductivity of the members are chosen and arranged to effect transfer of heat from hot regions of the fuel cell to cold regions of the fuel cell by thermal conduction.
